# EUROPEAN PATENT APPLICATION

(11) **EP 4 714 873 A2**
(43) Date of publication of application: **25.03.2026**
(21) Application number: 26157050.1
(22) Date of filing: 22.12.2022
(51) Int. Cl.: B65G 47/91

(54) **A SYSTEM AND METHOD FOR ENGAGING A PRODUCT FOR PRODUCT HANDLING**

(30) Priority: 22.12.2021 NL 2030229
(62) Divisional of application: 22834756.3
(71) Applicant: AWL-Techniek B.V., 3846 CN Harderwijk (NL)
(72) Inventor: BAHLMAN, Ernst Theodoor, 3846 CN Harderwijk (NL); NOLLET, Luuk Jochem Elbert, 3846 CN Harderwijk (NL); KROESE, Hendrik, 3846 CN Harderwijk (NL)
(74) Representative: V.O.

(57) **Abstract**

A system and method for engaging a product for product handling. The suction head for a product handling system for transferring products from a supply location to a discharge location comprises a body and at least one of a first suction unit and/or a second suction unit. The body is arranged for being mounted to a transfer unit. The first suction unit includes a first suction cup and one first pipe. The second suction unit includes a second suction cup and at least two second pipes. The first suction cup and/or second suction cup is arranged for engaging the product. The suction head is configured to have the first suction cup and/or second suction cup in fluid communication with suction means via the respective one first pipe and/or at least two second pipes for reducing pressure at the at least one first suction cup and/or second suction cup, wherein the respective one first pipe and/or at least two second pipes are longitudinally slidably engaged to the body.

## Description

### FIELD OF THE INVENTION

The present invention relates to the field of moving a product for product handling. In particular, the invention relates to the field of engaging a product at a supply location for product handling. More in particular, the invention relates to a system and method for engaging a product for transferring the product from a supply location to a discharge location for product handling.

### BACKGROUND

Products, such as packages and/or parcels, are generally handled using a product handling system. The products are known to be moved from a supply location to a discharge location using gripping means. These products e.g. include boxes, envelopes and/or bags. Gripping means are used to lift products from bulk and/or from a first transport system, such as a first conveyor, and transfer them to a second transport system, such as a second conveyor. A product is selectively engaged and/or enclosed by the gripping means, thereby applying a force to the product. When the product is gripped too firmly, a relatively large force is applied to the product, thereby having a risk of damaging and/or deforming the product. During product handling, the gripping means can rotationally and/or translationally move the product. As a result of rotational and/or translational movement and/or low gripping resistance of the gripping means, the product can fall from the gripping means, thereby possibly damaging and/or deforming the product. After a fall of the product, the gripping means need to grasp the product again, which is rather time consuming. Moreover, a recipient of a damaged and/or deformed product might require the intact, undamaged and undeformed, product thereby causing the damaged product to be returned to the sender and a new product to be sent to the recipient. This requires the product handling system to handle more products, thereby causing serious delays in the overall product handling process. Differences in shape, size, fill rate and/or firmness of a product require different handling techniques.

### SUMMARY

It is an object to provide a suction head for a product handling system for transferring products from a supply location to a discharge location, a product handling robot, a product handling system and/or a method for engaging a product at a supply location for product handling, that obviates, or at least diminishes the disadvantages mentioned above. More in general, it is an object to provide an improved suction head, or system therefore, and/or method for engaging a product at a supply location for product handling.

Thereto, according to a first aspect is provided a suction head for a product handling system for transferring products from a supply location to a discharge location. The to be transferred product can be a package, such as a box or bag. The products can have differences in size, shape, weight, fill rate and/or firmness. The products can e.g. be packages or parcels, such as in postal or courier product handling. It will be appreciated that the products can be other types of products. The weight of the product can e.g. be up to ten kilograms, such as up to five kilograms. The weight of the product can e.g. be more, e.g. more than ten kilograms. The supply location and/or the discharge location can have differences in type, shape and/or size. At the supply location, the products can be arranged in a pile, conveyor, pallet or bin, each product having different angles with respect to the surface. The discharge location can include a transport system, such as a conveyor. At the discharge location the products can e.g. be discharged onto a conveyor, pallet, cart and/or into a bin. The suction head comprises a body arranged for being mounted to a transfer unit. The transfer unit can be arranged for moving products from the supply location to the discharge location. The suction head further comprises at least one of a first suction unit and/or a second suction unit. Hence, the suction head can include one or more first suction units. Alternatively, the suction head can include one or more second suction units. Alternatively, the suction head can include one or more first suction units and one or more second suction units. The first suction unit includes a first suction cup arranged for engaging the product and a first pipe, such as one first pipe, wherein the first suction unit is configured to have the first suction cup in fluid communication with suction means via the first pipe for reducing pressure at the first suction cup, wherein the first pipe is longitudinally slidably engaged to the body. The second suction unit includes a second suction cup arranged for engaging the product and at least two second pipes, wherein the second suction unit is configured to have the second suction cup in fluid communication with suction means via the at least two second pipes for reducing pressure at the second suction cup, wherein the at least two second pipes are longitudinally slidably engaged to the body. The suction head can include more than one first suction unit and/or second suction unit.

The second suction unit can include more than two second pipes. The at least two second pipes of one second suction unit can be positioned in parallel with respect to each other, or comprise a nonzero angle with respect to each other. The respective one first pipe and/or at least two second pipes can be at least partially flexible and/or rigid. The suction head is configured to have the respective first suction cup and/or second suction cup in fluid communication with suction means via the respective one first pipe and/or at least two second pipes for reducing pressure at the at least one first suction cup and/or second suction cup. The at least two second pipes of the second suction unit ensure a lower pressure drop of the fluid over the length of the pipes at a smaller pipe diameter. The at least two second pipes of the second suction unit thus allow for a larger rate of fluid communication.

The first suction cup and/or second suction cup can be at least partially flexible and/or rigid. The first suction cup and/or second suction cup can be 3D-printed such that the shape and/or size of the respective suction cup can be adjusted for improving product engagement to suit different types of products and/or product handling purposes. The suction means can comprise a pump, such as a vacuum pump, e.g. a venturi pump or an ejector, or depressurizing means. The pressure inside the first suction cup and/or second suction cup can be reduced to a pressure that is lower than atmospheric pressure, such as a pressure lower than 1 barA, such as about 0,8 barA or less, e.g. about 0.04 barA. The suction means can be in fluid communication with the respective one first pipe and/or at least two second pipes via hoses, pipes, ducts, or the like. The hoses, pipes, ducts, or the like, can e.g. be fluid-tight and/or flexible. At least one of the hoses, pipes, ducts, or the like, can e.g. at least partially be integral with the body and/or the respective first suction unit and/or second suction unit and/or the respective first pipe and/or second pipe. The respective one first pipe and/or at least two second pipes are longitudinally slidably engaged to the body. The body can comprise recesses having a shape that at least partially encloses the pipes. As a result from the mechanical connection of the respective first suction cup and/or second suction cup to the respective one first pipe and/or at least two second pipes, the respective first suction cup and/or second suction cup can be prevented from rotating. This can help in stably engaging the product. At least one of the first and/or second pipes can comprise two or more parts that can slide in a longitudinal direction with respect to each other. The suction head can be configured such that the first and/or second suction unit is modular and the respective suction unit can be disconnected from the body so as to be exchanged, e.g. for service purposes.

Optionally, the body includes sliding bearings, such as sliding ball bearings, for slidingly supporting the first and/or second pipes.

Optionally, the suction head comprises at least one actuator for selectively moving the at least one first suction cup and/or second suction cup proximally or distally with respect to the body. The actuator can be a mechanical actuator, such as a pneumatical or hydraulical actuator, or an electrical actuator. The terms proximal movement and distal movement of the first suction unit and/or the second suction unit and the respective first suction cup and/or second suction cup should be interpreted as being defined with respect to the body.

Optionally, the suction head comprises a position detector arranged for detecting, e.g. measuring, displacement of the respective at least one first suction unit and/or second suction unit relative to the body. The position detector can be positioned integral with the body and/or the respective first suction unit and/or second suction unit.

Optionally, the suction head is configured to provide a warning signal when a predetermined distal and/or proximal displacement is determined by the position detector. The warning signal can comprise a visible signal, an audible signal and/or an electrical signal. The warning signal can be provided upon exceeding a predetermined distal and/or proximal displacement or upon dropping below the predetermined displacement depending on whether the limiting value is respectively a maximum value or a minimum value.

Optionally, the first pipe is prevented from rotating relative to the body. The first pipe can e.g. include longitudinal splines mating with longitudinal splines in the body.

Optionally, when viewed in the longitudinal direction of the first and/or second pipes, the respective one first pipe and/or at least two second pipes are positioned within the outer perimeter of the respective first suction cup and/or second suction cup. Thus a projection of the respective one first pipe and/or at least two second pipes, in the longitudinal direction of the first and/or second pipes, can be within the outer perimeter of the respective first suction cup and/or second suction cup. The actuator can also similarly be positioned within the outer perimeter of the respective first suction cup and/or second suction cup. Alternatively, the respective one first pipe and/or at least two second pipes and/or the actuator can be positioned at least partially outside the perimeter of the respective first suction cup and/or second suction cup.

Optionally, the suction head comprises a control unit configured to control a distance between the at least one first suction cup and/or second suction cup and the body. The control unit can be arranged to control the distance according to the product shape, size and/or firmness. The control unit can be arranged to control the distance for engaging the product, lifting the product and/or depositing the product. The control unit can include an input/output, I/O, module. The control unit can be mounted in or at the body, in or at the first and/or second suction unit and/or remote from the body and suction units in or at a robot or at or near the ground.

Optionally, the at least one first suction cup and/or second suction cup is arranged for tilting. The first suction cup and/or second suction cup can comprise a joint for tilting, e.g. a hinge joint.

Optionally, the first suction cup and/or second suction cup includes a gas permeable insert. The gas permeable insert can be arranged to, in use, prevent the respective first suction cup and/or second suction cup from deforming, such as buckling, when a reduced pressure in the suction cup is reached. The gas permeable insert can be positioned to reduce, in use, the contact surface of the respective first suction cup and/or second suction cup with the product in case of a deformable product, such as a plastic bag. The gas permeable insert can prevent the respective first suction cup and/or second suction cup from clogging. The gas permeable insert can reduce the contact surface between the respective first suction cup and/or second suction cup and the deformable product compared to a contact surface when using a non-permeable insert. Reduction of the contact surface between the first suction cup and/or second suction cup and the product can prevent the suction cup from becoming clogged by the deformable product.

The gas permeable insert can be configured to, in use, increase the pressure reduction close to the inner perimeter of the respective first suction cup and/or second suction cup. The gas permeable insert can include a basket having a bottom, sides, and an open mouth opposite the bottom. The bottom is mounted proximally while the mouth is positioned distally. The mouth of the insert is, in use, positioned at or close to the inner perimeter of the respective first and/or second suction cup. The bottom and/or the sides are preferably gas permeable, such as apertured. A flexible product, such as a, e.g. plastic, bag package, can be, at least partly, sucked into the insert. The sides being gas permeable, such as aperture, can provide the advantage that friction along the sides is generated between the product and the insert, such that distal movement of the package can be prevented, or at least minimized. The bottom being gas permeable, such as aperture, can provide the advantage that friction along the bottom is generated between the product and the insert, such that sideways movement of the package can be prevented, or at least minimized.

Optionally, a cross dimension of the insert, such as a diameter, increases from the mouth towards the bottom. It will be appreciated that the cross dimension of the insert, such as a diameter, can decrease from the mouth towards the bottom. This provides the advantage that the flexible product, such as the bag, can bulge inside the insert, requiring larger (shear) forces to remove the product from the insert and suction cup, which in turn can result in larger achievable movement speeds, accelerations and/or jerks without dropping the product from the suction cup.

Optionally, the insert includes external projections, such as ribs, for ensuring air flow between the insert and the suction cup. The insert can include a rim, e.g. at or near the mouth, for sealing (or at least minimizing air flow) between the rim and the suction cup.

The gas permeable insert can comprise or form a single wall or a double wall. The gas permeable insert can be positioned having a nonzero angle with respect to the longitudinal axis of the respective first suction cup and/or second suction cup. The nonzero angle positioning of the gas permeable insert with respect to the longitudinal axis of the respective suction cup provides an applied force at the deformable product that is applied in a nonzero angular direction with respect to the longitudinal axis of the suction cup. The non-longitudinal angular direction of the applied force at the product can provide a better grip of the respective suction cup during substantially horizontal movement of the product. The gas permeable insert can be positioned such that there is space between the gas permeable insert and the first suction cup and/or second suction cup..

Optionally, the respective first suction unit and/or second suction unit comprises a valve for blocking the fluid communication between the first suction cup and/or second suction cup and the suction means. The valve can be longitudinally slidably engaged to the respective first suction unit and/or second suction unit. Blocking the fluid communication by the valve can comprise severely limiting fluid communication, thereby still leaving a small fluid flow. Blocking the fluid communication can comprise completely obstructing fluid communication.

Optionally, the valve is positioned at a proximal part of the first pipe. The valve can be positioned at or close to the proximal end of the first pipe or between the middle and the proximal end of the first pipe. The terms proximal and distal regarding the various components of the suction head should be interpreted as being defined with respect to the pipe, proximal being towards the suction means and distal being towards the suction cup.

Optionally, the valve is positioned upstream or downstream of the at least two second pipes. The valve can be positioned proximal or distal with respect to the at least two second pipes. The terms upstream and downstream regarding the various components of the suction head should be interpreted as being defined with respect to flow towards the second suction cup.

Optionally, the valve is an axial valve. The axial valve can be positioned in the longitudinal direction of the respective first and/or second pipe. The axial valve can comprise a ring shaped valve seat that is movable in the longitudinal direction of the respective first and/or second pipe. The seat can be comprised by a movable proximal part of the first and/or second pipe. Optionally the seat is formed by a proximal end of the first pipe, such as a proximal circumferential edge, e.g. a frontal surface, of the proximal end of first pipe. Upon proximal movement of the movable proximal part, the seat can abut against a plug of the axial valve for closing the axial valve. The plug can be mounted, e.g. centrally, in an end cap of the suction unit, e.g. such that gas can flow through the end cap around the plug when the axial valve is open. The plug can e.g. be mounted to the end cap with spokes. The plug, or at least a portion of the plug can be unitary with the end cap. The movable proximal part of the respective pipe can be moved distally for positioning the seat away from the plug such that the axial valve is open. The seat and/or the plug can comprise a resilient surface, such as a rubber surface, to enhance sealing. It will be appreciated that the plug may be associated with the first and/or second pipe, and the seat can be associated with the end cap.

Optionally, the suction head is arranged to close the valve when proximally moving the first suction cup and/or second suction cup to a predetermined proximal position. Closing the valve can comprise completely obstructing fluid communication or at least severely limiting or obstructing fluid communication between the first suction cup and/or second suction cup and the suction means. The valve can be configured to allow for a small fluid flow to pass when the valve is in the closed position. The valve can be arranged to remain closed when the valve is in the predetermined proximal position.

Optionally, the valve is configured such that proximally moving the first suction cup and/or second suction cup to the predetermined proximal position closes the valve. The movement of the valve can e.g. be mechanically, pneumatically or electrically actuated.

Optionally, the valve includes a stem movable between a closed position and an open position, wherein the stem is biased to the open position, and moving the first suction cup and/or second suction cup to the predetermined proximal position moves the stem to the closed position. The stem can slidably move between the open position and the closed position. Proximal movement of the first and/or second suction unit with respect to the body can cause the stem to be mechanically moved to the closed position. For example, proximal movement of the first and/or second suction unit with respect to the body can cause the stem to abut against the body, urging the stem to the closed position.

Optionally, the first pipe is telescopic. Optionally, one or more of the second pipes is telescopic. The telescopic pipe can provide the advantage that a distal part of the pipe can slidably move relative to the body, while a proximal part of the pipe can remain stationary relative to the body. The distal part can be slidingly sealed to the proximal part. Optionally, the distal part of the pipe and the proximal part of the pipe can both slidably move relative to the body. In such case, the proximal part of the pipe can e.g. be movable for opening and closing the axial valve, while the distal part of the pipe can be movable for axially moving the suction cup.

Applying suction, such as subatmospheric pressure to the telescopic pipe may generate a force urging the telescopic pipe to retract the distal part relative to the proximal part. Optionally, the suction head includes a compensating mechanism for compensating a force, working to retract the suction cup, generated by suction applied to the telescopic pipe. The compensating mechanism can include a piston closing a fluid volume in communication with the suction means. The fluid volume can be proximal or distal with respect to the piston. The piston can be fixed to a movable distal portion of the telescopic pipe. Applying the suction to the volume, will urge the piston distally, thereby providing a force urging the distal part distally relative to the proximal part. The movable distal portion can comprise a first aperture in its circumferential wall. The first aperture can be positioned to provide fluid communication between the fluid volume and the inside of the movable distal portion. Hence, the suction means are in communication with the fluid volume. Optionally, a cross sectional area of the piston is, at least substantially, equal to a cross sectional area of the pipe, e.g. an inner cross sectional area of the distal part. Thereby, the compensating force is substantially equal to the force attempting to retract the distal part. It will be appreciated that instead of a piston, the compensating mechanism can include a bellows.

Optionally, the first pipe and/or the at least two second pipes can be at least partially longitudinally extendable with respect to the body, such as by including bellows in the respective first pipe and/or at least two second pipes. The compensating mechanism can be applied in a similar manner to the first pipe, and/or the second pipes, when the first pipe is at least partially longitudinally extendable with respect to the body.

Optionally the compensating mechanism can be located outside the telescopic or extendable pipe in one or more cylinders or bellows that are linked (with or without gears/force transfer methods) to both sides of the telescopic or extendable pipe.

Optionally, the suction head comprises a sensor for measuring a weight of the product. The sensor can e.g. be a force sensor, pressure sensor or current sensor. The sensor can be positioned at or near the first suction cup and/or second suction cup. The sensor can be positioned in the first and/or second suction unit or on top of the total design.

Optionally, the suction head includes a plurality of first suction units and/or a plurality of second suction units. Two or more first suction units and/or second suction units can be in fluid communication with the same suction means.

According to a second aspect is provided a product handling robot, comprising a movable arm, such as an articulated movable arm, and a suction head as described mounted to the movable arm. It will be appreciated that the product handling robot can comprise a different type of robot suitable for handling products, such as an articulated robot, gantry robot, delta robot or scara robot. The body of the suction head and/or the first and/or second suction unit can be mounted to the movable arm. The product handling robot can, in use, have at least one degree of freedom.

According to a third aspect is provided a product handling system, comprising a suction head as described and/or a product handling robot as described. The product handling system can transfer products, such as packages, e.g. boxes and/or bags, from a supply location to a discharge location. Two or more suction heads can be in fluid communication with the same suction means.

According to a fourth aspect is provided a method for engaging a product at a supply location for product handling. The method comprises providing at least one of a first suction unit including a first suction cup and one first pipe, wherein the first suction cup is in fluid communication with the one first pipe, wherein the one first pipe is longitudinally slidably engaged to a body, and/or a second suction unit including a suction cup and at least two second pipes, wherein the second suction cup is in fluid communication with the at least two second pipes, wherein the at least two second pipes are longitudinally slidably engaged to a body. The method further comprises sliding the at least one first suction cup and/or second suction cup with respect to the body. The sliding can be ensured by at least partially interlocking shapes of the first suction cup and/or second suction cup and the body. The method comprises engaging the at least one first suction cup and/or second suction cup to the product. The method comprises reducing pressure at the at least one first suction cup and/or second suction cup via the respective one first pipe and/or at least two second pipes. The pressure can be reduced using the suction means. The first suction cup and/or second suction cup can at least partially deform when reducing pressure at the respective first suction cup and/or second suction cup.

Optionally, the method comprises actively sliding the at least one first suction cup and/or second suction cup proximally or distally with respect to the body using at least one actuator. The actuator can be a mechanical actuator or an electrical actuator.

Optionally, the method comprises detecting, e.g. measuring, displacement of the respective at least one first suction unit and/or second suction unit relative to the body. The displacement can be detected, e.g. measured, using a position detector.

Optionally, the method comprises providing a warning signal when a predetermined distal and/or proximal displacement is determined.

Optionally, the method comprises controlling the distance between the first suction cup and/or second suction cup and the body, e.g. according to the product shape and/or size.

Optionally, the method comprises tilting of the at least one first suction cup and/or second suction cup. The second suction cup can be prevented from rotating when the second suction cup is mounted to the second suction unit with at least two second pipes.

Optionally, the method comprises preventing the first suction cup and/or second suction cup from deforming, such as buckling, and fluid blockage using a gas permeable insert.

Optionally, the method comprises blocking the fluid communication close to the first suction cup and/or second suction cup using a valve. It will be appreciated that the valve can block fluid communication between the suction means and the respective first suction cup and/or second suction cup. Blocking the fluid communication by the valve can comprise completely obstructing or at least severely limiting fluid communication. The valve can be attached to the respective first pipe and/or second pipe for blocking the fluid communication.

Optionally, the method comprises closing the valve when proximally moving the first suction cup and/or second suction cup to a predetermined proximal position.

Optionally, proximally moving the first suction cup and/or second suction cup to the predetermined proximal position closes the valve.

Optionally, the method comprises moving a stem of the valve between a closed position and an open position, wherein the stem is biased to the open position, and moving the first suction cup and/or second suction cup to the predetermined proximal position moves the stem to the closed position.

Optionally, the method comprises measuring the weight of the product, e.g. using the suction head, e.g. using the respective at least one of a first suction unit and/or a second suction unit. Measuring the weight can comprise deriving an indication of the weight, e.g. from the actuator current.

Optionally, the method comprises moving the product from a supply location to a discharge location.

According to a fifth aspect is provided an insert for a suction cup, including a basket having a bottom, sides, and an open mouth opposite the bottom. The bottom can be positioned proximally relative to the suction cup, while the mouth can be positioned distally. The bottom and/or the sides are preferably apertured. Optionally, a cross dimension of the insert, such as a diameter, increases from the mouth towards the bottom. Optionally, the mouth has an internal cross sectional area smaller than a maximum internal cross sectional area of the insert in a plane parallel to the mouth. Optionally, the insert includes external projections, such as ribs, for ensuring air flow between the insert and the suction cup. The insert can include a rim, e.g. at or near the mouth, for sealing (or at least minimizing air flow) between the rim and the suction cup.

It will be appreciated that any of the aspects, features and options described in view of the suction head apply equally to the product handling robot, the product handling system and to the method for engaging a product at a supply location for product handling, and vice versa. It will also be clear that any one or more of the above aspects, features and options can be combined.

### BRIEF DESCRIPTION OF THE DRAWINGS

Embodiments of the present invention will now be described in detail with reference to the accompanying drawings in which:
Figure 1 shows an illustration of a schematic representation of an example of a cross-section of a front view of a suction head;
Figure 2 shows an illustration of a schematic representation of an example of a cross-section of a top view of a second suction unit;
Figure 3A shows an illustration of a schematic representation of an example of a cross-section of a front view of a part of a second suction unit wherein the valve is in the open position;
Figure 3B shows an illustration of a schematic representation of an example of a cross-section of a front view of a part of a second suction unit wherein the valve is in the closed position;
Figure 4 shows a schematic representation of an example of an insert;
Figure 5 shows an illustration of a schematic representation of an example of a cross-section of a front view of a first suction unit;
Figure 6 shows an illustration of a schematic representation of an example of a cross-section of a front view of a first suction unit;
Figure 7 shows an illustration of a schematic representation of an example of a front view of a first suction unit;
Figure 8 shows an illustration of a schematic representation of an example of a cross-section of a front view of a product handling robot;
Figure 9 shows an illustration of a schematic representation of an example of a cross-section of a front view of a product handling system;
Figure 10 shows an example of a perspective view of a suction head with multiple suction units;
Figure 11 shows an example of a side view of a suction head with multiple suction units;
Figure 12 shows an example of a perspective view of a suction head with multiple first suction units; and
Figure 13 shows an exemplary flow chart of a method for engaging a product at a supply location for product handling.

### DETAILED DESCRIPTION

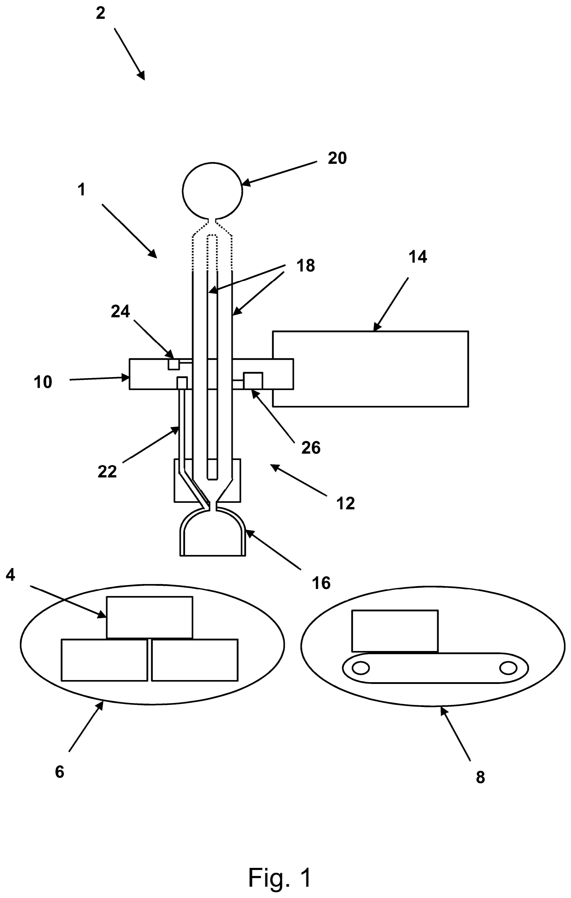

Figure 1 shows an example of a cross-section of a front view of a suction head 1 for a product handling system 2 for transferring a product 4 from a supply location 6 to a discharge location 8. The suction head 1 can comprise a body 10 and at least one of a first suction unit 38 with one first pipe 40 and/or a second suction unit 12 with at least two second pipes 18. Here, the suction head 1 comprises a body 10 and a second suction unit 12. In this example, the second suction unit 12 includes a second suction cup 16 and at least two second pipes 18. It will be appreciated that the second suction unit 12 can include more than two second pipes 18 and/or the suction head 1 can include more than one suction unit 12. In this example, the body 10 is mounted to a transfer unit 14 for moving a product 4 from the supply location 6 to the discharge location 8. The product 4 can be a package, such as a box or bag. In this example, the product 4 has a rectangular shape, however the product 4 can have any shape. The weight of the product 4 is preferably up to 5 kilograms. The weight of the product can e.g. be more than five kilograms. The supply location 6 can include a bulk of products 4. The discharge location 8 can include a transport system, such as a conveyor. Alternatively, or additionally, the supply location can include a bin containing the products 4 and/or the discharge location can include a bin for receiving the products. The second suction cup 16 is arranged for engaging the product 4. In this example, the product 4 can be engaged from the top side, however the product 4 can also be engaged from the right side, left side, front side, back side or from the bottom side. Although the product 4 is in this example positioned upright, the product 4 can also be positioned in different orientations e.g. having a nonzero angle with respect to the underlying surface. Here, the at least two second pipes 18 are positioned in parallel with respect to each other. However, the pipes 18 can be positioned comprising a nonzero angle with respect to each other.

The second suction cup 16 is in this example shown as being relatively large with respect to the product 4, however in case of multiple suction units 12 the second suction cups 16 can be smaller such that more than one second suction cup 16 is able to engage the product 4 simultaneously. Here, the suction head 1 is configured to have the second suction cup 16 in fluid communication with suction means 20 via the at least two second pipes 18. The second suction cup 16 can be arranged for tilting. The second suction cup 16 is in this example prevented from rotating with respect to the longitudinal axis of the second suction cup 16 due to its mechanical connection to the at least two second pipes 18. Here, the dashed lines between the pipes 18 and the suction means 20 in Figure 1 indicate that this part can consist of one or more hoses and/or ducts having any shape and/or trajectory. The hoses and/or ducts can be at least partially flexible. At least one of the hoses and/or ducts can at least partially be integral with the body 10 and/or the respective first and/or second suction unit 38,12 and/or the respective first and/or second pipe 40,18. The body 10 with integral hoses and/or ducts can e.g. be 3D printed. The suction means 20 are arranged for reducing pressure in the at least one second suction cup 16. Here, the at least two second pipes 18 are longitudinally slidably engaged to the body 10.

In this example, the suction head 1 comprises at least one actuator 22. The actuator 22 is arranged for selectively moving the at least one second suction cup 16 proximally or distally with respect to the body 10. Here, the actuator 22 is shown as a mechanical actuator. The actuator 22 can e,g, include a pneumatic cylinder, a hydraulic cylinder and/or a spring. It will be appreciated that the actuator 22 can be an electrical actuator, or an electrically controlled actuator. Here, the suction head 1 comprises a position detector 24. The position detector 24 is arranged for measuring displacement of the at least one second suction unit 12 relative to the body 10. In this example, the suction head 1 comprises a control unit 26. The control unit 26 is in this example configured to control the distance between the second suction cup 16 and the body 10, e.g. by controlling the actuator 22. The distance can be controlled according to the shape and/or size of the product 4 that is to be engaged. In this example, the actuator 22, position detector 24 and control unit 26 are integrated in the body 10, however they can also be separate units, e.g. positioned remote from the second suction unit 12, and/or integrated in the second suction unit 12. The control unit 26 can include an input/output, I/O, module. Here, the suction head 1 is configured to provide a warning signal when a predetermined distal and/or proximal displacement is determined by the position detector 24. Hence, when the second suction unit 12 is moved to a limiting proximal and/or distal position, e.g. within a predetermined safety distance, the warning signal can be provided. While a controllable actuator is shown in Fig. 1, it will be appreciated that it is also possible that instead of a controllable actuator the second suction cup 16 can also be biased relative to the body 10. The second suction cup 16 can e.g. be biased distally by a resilient member such as a spring.

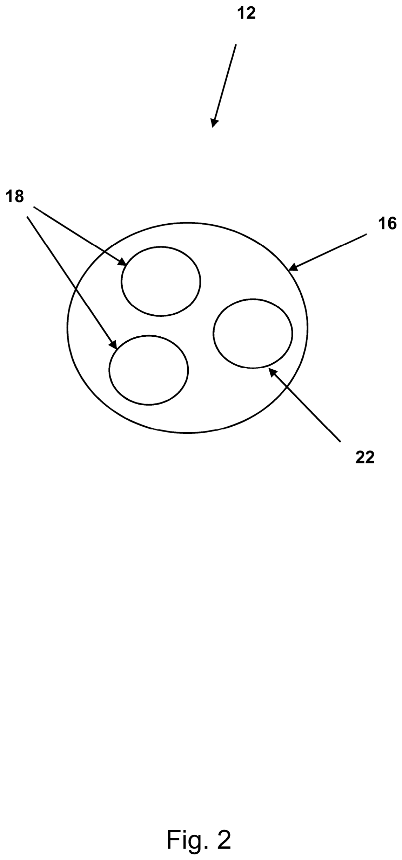

Figure 2 shows an example of a cross-section of a top view of a second suction unit 12. In this example, the at least two second pipes 18 are positioned within the outer perimeter of the second suction cup 16. Here, the actuator 22 is also positioned within the outer perimeter of the second suction cup 16. The actuator 22 can be positioned at least partially outside the perimeter of the second suction cup 16.

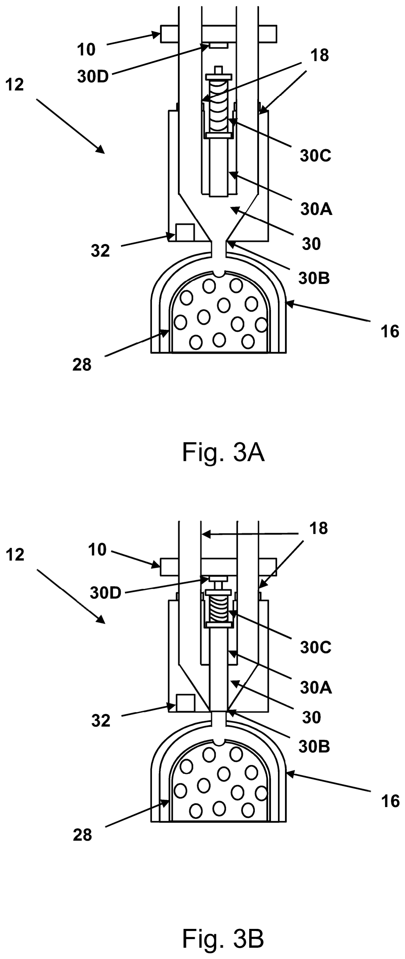

Figures 3A and 3B show an example of a cross-section of a front view of a part of the second suction unit 12 with the second suction cup 16 and at least two second pipes 18. The second suction unit 12 includes a valve 30 for blocking the fluid communication between the second suction cup 16 and the suction means 20. Blocking the fluid communication by the valve 30 can comprise completely obstructing or at least severely reducing fluid communication. The valve 30 can be configured to allow for a small fluid flow to pass through the at least two second pipes 18 when the valve 30 is in the closed position. Figure 3A shows the valve 30 in the open position and Figure 3B shows the valve 30 in the closed position. The valve 30 in this example includes a valve stem 30A that can close against a valve seat 30B. The valve stem 30A here is biased to the open position, here by means of a spring 30C. Here, the valve 30 is configured to move longitudinally in a direction that is parallel to the longitudinal direction of the pipes 18. It will be appreciated that the valve 30 can be configured to move in different directions. The suction head 1 is in this example arranged to close the valve 30 when proximally moving the second suction cup 16 to a predetermined proximal position. Here, the valve 30 is configured such that proximally moving the second suction cup 16 to the predetermined proximal position closes the valve 30. Here, moving the second suction cup 16 to the predetermined proximal position moves the stem 30A of the valve 30 to the closed position. Thereto in this example, the proximal end of the stem 30A abuts against a stop 30D, preventing the stem from further moving proximally while the pipes and suction cup continue to move proximally. The actuation of the valve 30 is in this example mechanically actuated by the stop 30D and the spring 30C. However, the motion of the valve 30 can be actuated otherwise, such as e.g. pneumatically, hydraulically or electrically. It is for instance possible to have the actuator 22 move the suction cup to the predetermined proximal position, by which the stem 30A of the valve 30 will automatically be closed against the seat 30B. In this way it is possible to selectively close the valve. For instance when the suction head 1 includes more than one suction unit 12, in this way second suction cups 16 that do not engage a product 4 can be closed to avoid loss of suction.

In the examples of Figures 3A and 3B, the second suction cup 16 includes a gas permeable insert 28. A gas permeable insert 28 is arranged to, in use, prevent the second suction cup 16 from clogging. The gas permeable insert 28 can also be arranged to reduce the contact surface of the second suction cup 16 with the product 4 in case of a deformable product 4, such as a plastic bag. Reduction of the contact surface between the second suction cup 16 and the product 4 can prevent a top section of the suction cup 16 from becoming blocked by the deformable product 4. The gas permeable insert 28 can be configured to, in use, increase the pressure reduction close to the perimeter of the contact surface of the second suction cup 16 with the product 4. The gas permeable insert 28 therefore ensures that, in use, a relatively large suction area and a large applied force at the product 4 can be maintained at the second suction cup 16, thereby minimizing sideways movement of the product 4 with respect to the second suction cup 16 during substantially horizontal movement of the suction head 1. The gas permeable insert 28 can comprise a single wall or a double wall. Here, the gas permeable insert 28 is positioned such that there is space between the gas permeable insert 28 and the second suction cup 16. The gas permeable insert 28 can prevent the second suction cup 16 from deforming, such as buckling, when a reduced pressure in the second suction cup 16 is reached.

Here, the second suction unit 12 includes a sensor 32, such as a force sensor, pressure sensor or current sensor, for measuring a weight of the product 4. It will be appreciated that the sensor 32 can be positioned at the body 10, or the sensor 32 can be integrated in the actuator 22.

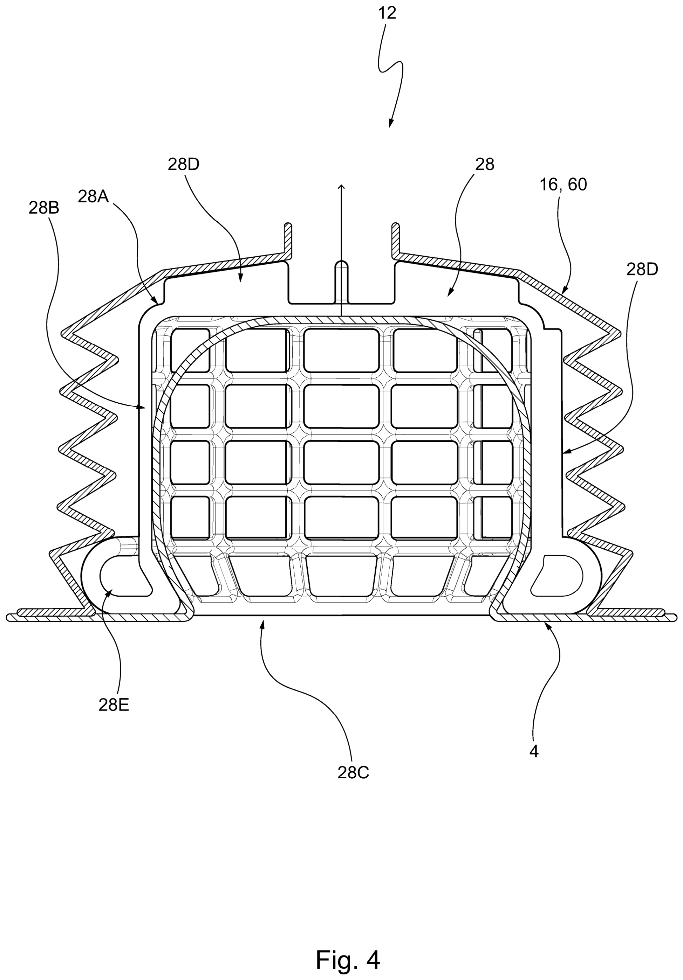

Figure 4 shows an example of a gas permeable insert 28 inserted into a suction cup 16, 60. In this example, the suction cup is of the bellows type. The insert 28 here is formed as a basket. The insert 28 has a bottom 28A. The insert 28 has sides 28B, here a circumferential side wall. The insert 28 also has an open mouth 28C opposite the bottom 28A. As can be seen in Figure 4, in this example the bottom 28A is positioned proximally relative to the suction cup, while the mouth 28C is positioned distally. In this example, the bottom 28A and the sides 28B are air permeable, in particular apertured. Hence, the basket here forms a wire basket. But other apertures or permeability can be used.

In this example, the insert includes external projections 28D, such as ribs, for ensuring air flow between the insert and the suction cup. In this example, the insert includes a rim 28E. Here, the rim 28E is placed at the mouth. The rim 28E aids in maintaining the insert 28 in the suction cup 16, 60. In this example, the rim is inserted in a ring of the bellows. The rim 28E can also aid in sealing, or at least minimizing air flow, between the rim and the suction cup.

In this example, a cross dimension of the insert, here a diameter, increases from the mouth towards the bottom. In this example, the mouth has an internal cross sectional area smaller than a maximum internal cross sectional area of the insert in a plane parallel to the mouth, here about half way the circumferential wall.

In Figure 4 also part of a wall of a deformable product 4, such as a plastic bag, is shown. In this example, the product 4 bulges into the insert 28. The sides 28B being permeable, here aperture, here provides the advantage that friction between the product and the insert is generated along the sides 28B, such that distal movement of the product 4 can be prevented, or at least minimized. The bottom 28A being permeable, here apertured, here provides the advantage that friction between the product and the insert is generated along the bottom 28A, such that sideways movement of the package can be prevented, or at least minimized. The product 4 bulging inside the insert provides the advantage that the deformable product 4, such as the bag, requiring larger (shear) forces to remove the product 4 from the insert 28 and suction cup 16, 60, which in turn can result in larger achievable movement speeds, accelerations and/or jerks without dropping the product from the suction cup.

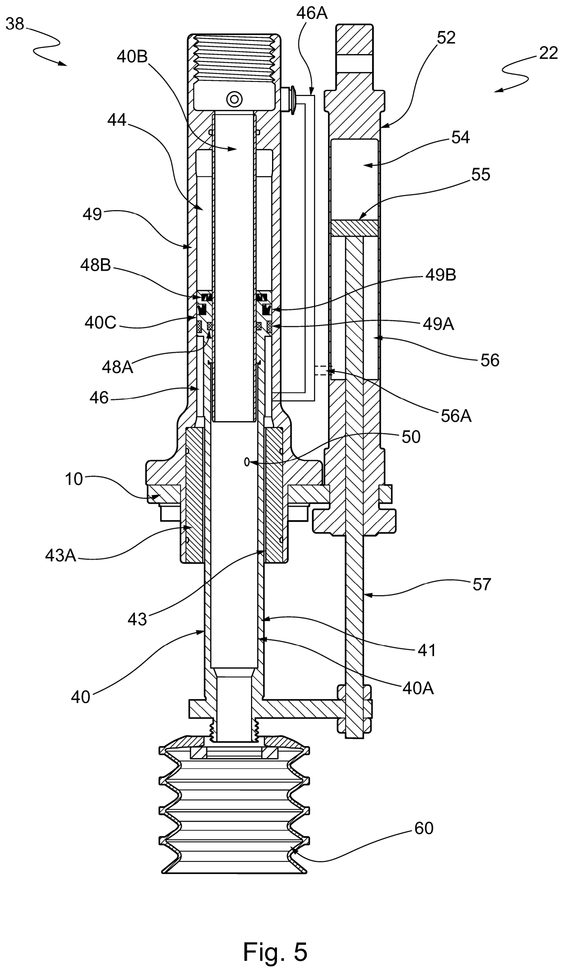

Figure 5 shows an example of a cross-section of a front view of a first suction unit 38. The first suction unit 38 can be included in a suction head 1 for a product handling system 2 for transferring products 4. The first suction unit 38 can be included in the suction head 1 according to the example of Figure 1 in addition to the second suction unit 12 and/or as a replacement of the second suction unit 12. The first suction head 38 comprises at least one first suction cup 60 arranged for engaging the product 4. The first suction head 38 comprises one first pipe 40 for providing fluid communication between the at least one first suction cup 60 and suction means 20 for reducing pressure at the at least one suction cup, wherein the one first pipe 40 is longitudinally slidably engaged to a body 10. In this example, the first suction cup 60 is prevented from rotating with respect to the longitudinal axis of the first suction cup 60. The first suction cup 60 is in fluid communication connected to first pipe 40. The first pipe 40 is prevented from rotating relative to the body 10. The first pipe 40 can e.g. have a splined surface mating with a splined surface of the body 10. In this example, the first pipe has a splined surface 41, here a splined outer surface, mating with a splined surface 43, here a splined inner surface, of a spline bush 43A which is fixed to the body 10.

In this example the first pipe 40 is a telescopic first pipe. The telescopic first pipe 40 includes a distal first pipe 40A and a proximal first pipe 40B. Here, the distal first pipe 40A is slidable relative to the body 10, while the proximal first pipe 40B is stationary relative to the body. The distal first pipe 40A is slidable sealed to the proximal first pipe 40B. Thereto one or more seals, such as an O-ring and/or lip seal, 48A, 48B may be provided, e.g. in a piston 40C.

In this example the first suction unit 38 further comprises a third pipe 49. The third pipe 49 is fixedly mounted to the body 10. The distal first pipe 40A is in this example also slidable sealed to the third pipe 49. Thereto one or more seals, such as an O-ring and/or lip seal, 49A, 49B may be provided, e.g. in the piston 40C.

The piston 40C defines a first annular volume 46 inside the third pipe 49 surrounding the distal first pipe 40A. In this example, this volume 46 is in communication with the suction means 20, here at the mouth of the proximal first pipe 40B, e.g. via a pipe or tube 46A. In this example, a cross sectional area of the first annular volume 46 is substantially equal to an inner cross sectional area of the distal first pipe 40A. This provides the advantage that applying suction to the telescopic first pipe 40 will not, or at least hardly, result in forces urging the distal first pipe 40A to retract with respect to the body 10. It will be appreciated that the first volume 46, the piston 40C and the pipe or tube 46A form a compensation mechanism for compensating a retracting force provided by the suction. Alternatively, if the fluid communication in the pipe or tube 46A would be interrupted, e.g. by a closed valve, and the pressure in volume 46 would be increased, the distal first pipe 40A would be urged to retract with respect to the body 10.

The piston 40C defines a second annular volume 44 inside the third pipe 49 surrounding the proximal first pipe 40B. The second annular volume 44 can be in communication with a source of pressure, such as compressed air. Then, applying a pressure inside the second volume 44 can be used for urging the suction cup 60 distally. Alternatively, or additionally, a resilient member, such as a helical spring can be housed in the second volume 44 for urging the suction cup 60 distally.

Alternatively, or additionally, the first suction unit 38 can comprise an external actuator, such as a pneumatic cylinder 52. The pneumatic cylinder defines a third volume 54 over the piston 55 and a fourth volume 56 under the piston, surrounding the stem 57. Applying a pressure to the third volume can likewise urge the suction cup 60 distally. A cross sectional area of the fourth annular volume 56 can be substantially equal to an inner cross sectional area of the first pipe 40. The fourth volume 56 can be in communication with the suction means 20, here at the mouth of the proximal first pipe 40B, e.g. via a pipe or tube 56A. This too can provide the advantage that applying suction to the telescopic first pipe 40 will not, or at least hardly, result in forces urging the distal first pipe 40A to retract with respect to the body 10. It will be appreciated that if both the first volume 46 and the fourth volume 56 are in communication with the suction means, it is preferred that the combined cross sectional area of the first and fourth annular volumes 46, 56 is substantially equal to an inner cross sectional area of the first pipe 40. Although described in view of the first pipe, it will be appreciated that the second pipes 18 can similarly be embodied as telescopic second pipes 18.

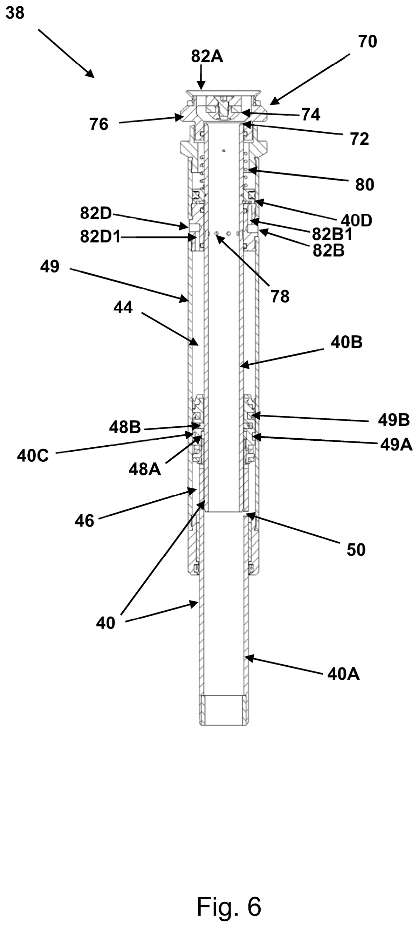

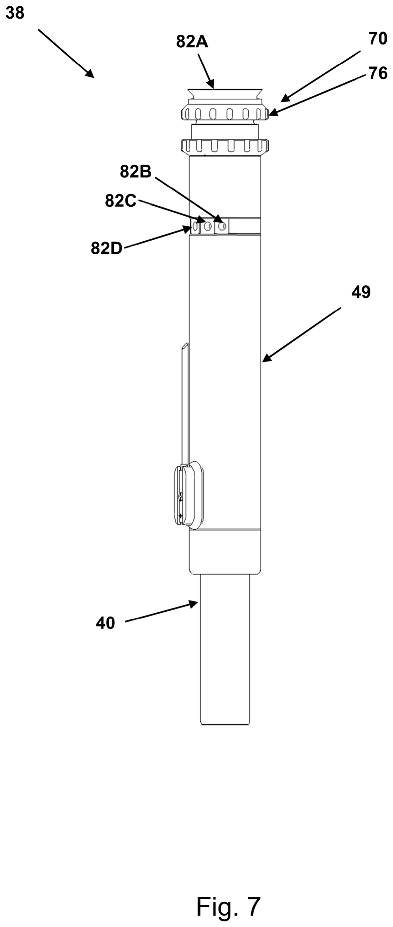

Figures 6 and 7 show an example of a cross-section of a front view of a first suction unit 38. In this example the distal first pipe 40A is freely rotatable relative to the proximal first pipe 40B. In this example the distal first pipe 40A is freely rotatable relative to the third pipe 49. In this example the proximal first pipe 40B is freely rotatable relative to the third pipe 49. In this example, the first suction unit 38 has four ports 82A, 82B, 82C, 82D for connection to gas lines, such as compressed air or vacuum lines. Here, the first suction unit 38 has an axial valve 70 for blocking the fluid communication between the first suction cup 60 and the suction means 20. Via the first port 82A the suction means 20 can be coupled in fluid communication with the first suction unit 38. Blocking the fluid communication by the valve 70 can comprise completely obstructing or at least severely reducing fluid communication. The valve 70 can be configured to allow for a small fluid flow to pass through the first pipe 40 when the valve 70 is in the closed position. The axial valve 70 is positioned in the longitudinal direction of the first pipe 40. The axial valve 70 comprises a seat 72 that is movable in the longitudinal direction of the first pipe 40. The seat can be formed by a proximal end of the first pipe, such as a proximal circumferential edge, e.g. a frontal surface, of the proximal end of first pipe Here, the seat is formed by a proximal end surface of the proximal first pipe 40B.

The proximal first pipe 40B is, here, movable relative to third pipe 49. The proximal first pipe 40B has a second piston 40D attached thereto. The second piston 40D seals against the inner wall of the third pipe 49. The second port 82B can be coupled in fluid communication with a pressurized gas source. Via a bore 82B1 the second port 82B is in fluid communication with a chamber proximal of the second piston 40D. Pressurizing the chamber proximal of the second piston 40D will force the piston 40D proximally, and will force the seat 72 against a plug 74 of the axial valve 70. Here, an end cap is attached to the proximal end of the proximal first pipe 40B. In this example, the plug 74 is attached to the end cap 76 via spokes. At least a part of the plug 74 is unitary with the end cap 76 in this example. In the open position, the seat 72 is positioned away from the plug 74. Here, the seat 72 has a substantially conical contact surface. In this example, the plug 74 comprises a ring of resilient material, such as rubber, for forming good sealing contact with the seat 72.

The third port 82C in this example is in fluid communication with the inside of the first pipe 40A, 40B. Here, the proximal first pipe 40B comprises an annular groove around its outer perimeter in communication with one or more apertures 78. Via the third port 82C gas, such as pressurized gas, can be allowed to enter the inside of the first pipe 40A, 40B for instance for releasing vacuum for releasing the product captured by the suction cup.

The fourth port 82D is in fluid communication with the second annular volume 44 proximal of the piston 40C via a bore 82D1. Pressurizing the second annular volume 44 will force the piston 40C distally, and will force the distal first pipe 40A distally.

In this example, the first annular volume 46 is in fluid communication with the suction means 20 via a first aperture 50. Here, the first aperture 50 is located in the distal first pipe 40A. It will be appreciated that in this example the first volume 46, the piston 40C and the first aperture 50 form a compensation mechanism for compensating a retracting force provided by the suction.

Figure 7 shows an illustration of a schematic representation of an example of a front view of the first suction unit 38 of figure 6. It will be appreciated that pneumatic valves can be mounted directly to the second, third and fourth ports 82B, 82C, 82D. Hence a very compact design can be obtained. Further, the pathway length for gas, e.g. pressurized air, or vacuum to the first pipe can be minimized. For example, the first port 82A is connected to the suction means 20. For example, the second port 82B is selectively connected to a pressurizes gas source or atmospheric pressure. For example, the third port 82C is selectively connected to a pressurized gas source or closed. For example, the fourth port 82D is selectively, e.g. via one or more valves, connected to the suction means, a pressurized gas source, atmospheric pressure, or closed.

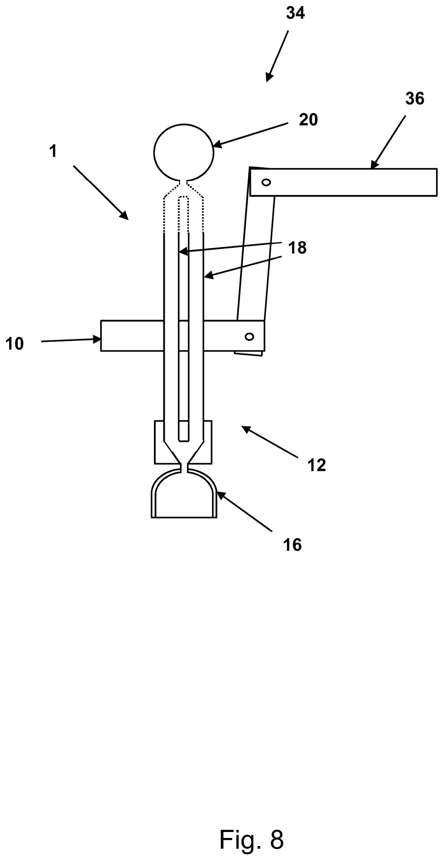

Figure 8 shows an example of a cross-section of a front view of a product handling robot 34. The product handling robot 34 comprises a movable arm 36 and the suction head 1 mounted to the movable arm 36. Here, the body 10 of the suction head 1 is mounted to the movable arm 36. It will be appreciated that a different part of the suction head 1 can be mounted to the movable arm 36. Here the arm 36 is an articulated arm. In this example, the movable arm 36 comprises two parts that are hingedly and/or rotatably connected. The movable arm 36 can comprise more than two parts and/or a different connection between the parts. It will be appreciated that the product handling robot 34 can comprise multiple movable arms 36 and one or more suction heads mounted to the multiple movable arms 36.

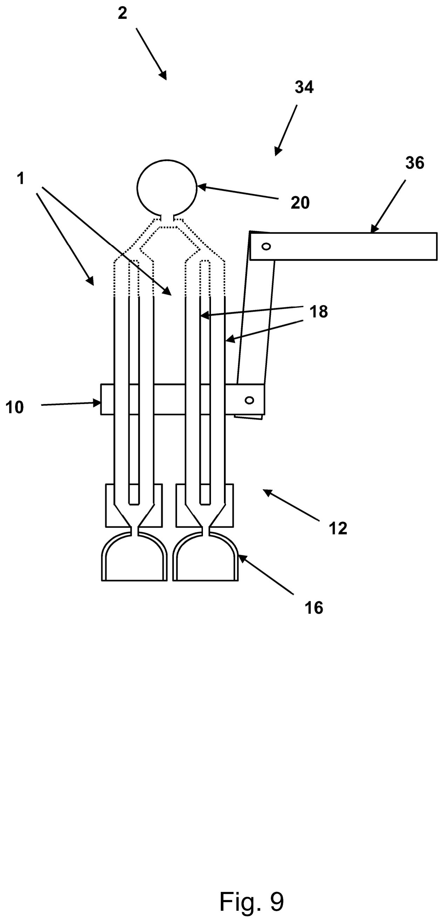

Figure 9 shows an example of a cross-section of a front view of a product handling system 2. Here, the product handling system 2 comprises a product handling robot 34 including multiple suction units 12. The product handling system 2 can comprise further suction heads 1 and/or further product handling robots 34. The product handling system 2 can move the product 4 from the supply location 6 to the discharge location 8.

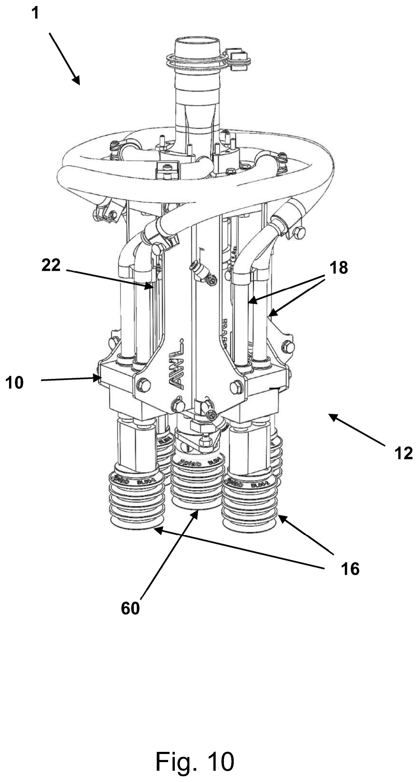

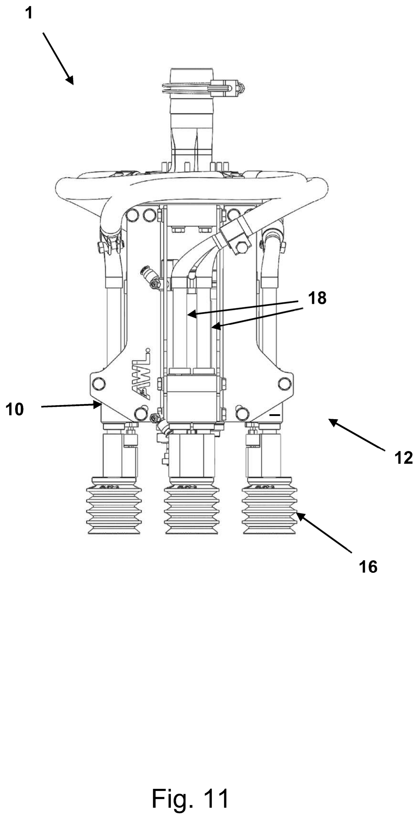

Figures 10 and 11 show an example of the suction head 1 having multiple suction units. In this example, the middle one of the various suction units is a first suction unit 38 with one first pipe 40 and a first suction cup 60, and the outer ones are second suction units 12 with each comprising at least two second pipes 18 and a second suction cup 16. The respective one first pipe 40 and/or at least two second pipes 18 are longitudinally slidably engaged to the body 10 of the respective first suction unit 38 and/or second suction unit 12. Here, each suction unit 12, 38 has an associated actuator 22. The actuator 22 is arranged for selectively moving the respective first suction cup 60 and/or second suction cup 16 of the respective first suction unit 38 and/or second suction unit 12 proximally or distally with respect to the respective body 10.

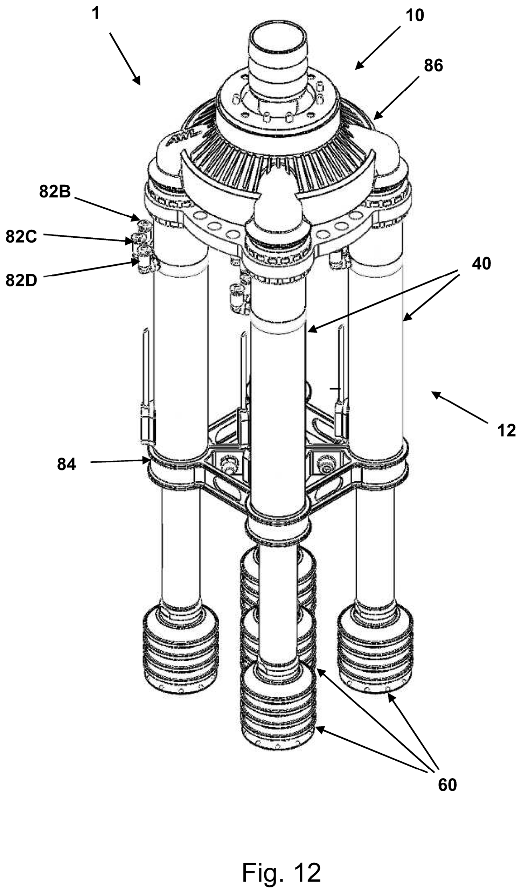

Figure 12 shows an example of a suction head 1 having multiple first suction units 38 according to figures 6 and 7. Here, the first suction units 38 are mounted in a frame 84 to position the suction units, e.g. at an equal distance. A cover 86 engages the first suction units 38 at their proximal end. The cover 86 can be 3D-printed. The cover 86 can be used to tuck hoses, ducts, pipes and/or parts thereof underneath so as to prevent other parts from getting caught behind said hoses, ducts or pipes. Alternatively, the ducts can be part of the cover, e.g. when 3D printed. The frame 84 and cover 86 allow for exchange of one or more first suction units 38 such as required during maintenance and/or repair.

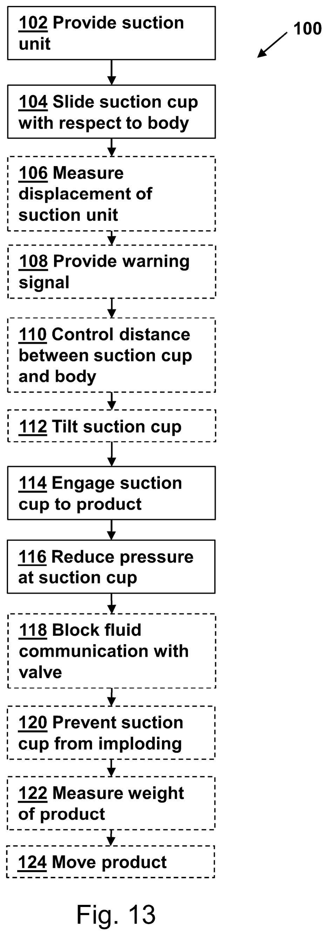

Figure 13 shows an example of a flow chart of a method 100 for engaging a product 4 at a supply location 6 for product handling. Optional steps are shown in dashed boxes. Thereto, in a first step 102 at least one of the first suction unit 38 and/or the second suction unit 12 is provided. The first suction unit 38 includes the first suction cup 60 and one first pipe 40. The first suction cup 60 is in fluid communication with the one first pipe 40, wherein the one first pipe 40 is longitudinally slidably engaged to the body 10. The second suction unit 12 includes the second suction cup 16 and at least two second pipes 18. The second suction cup 16 is in fluid communication with the at least two second pipes 18, wherein the at least two second pipes 18 are longitudinally slidably engaged to the body 10. Step 102 is performed prior to the other steps. The method 100 further comprises sliding the first suction cup 60 and/or second suction cup 16 with respect to the body 10 in step 104. Optionally, step 104 comprises actively sliding the first suction cup 60 and/or second suction cup 16 proximally or distally with respect to the body 10 using at least one actuator 22.

In step 106, the displacement of the at least one of the first suction unit 38 and/or second suction unit 12 relative to the body 10 can be measured. A warning signal can be provided when a predetermined distal and/or proximal displacement is determined in step 108. The distance between the first suction cup 60 and/or second suction cup 16 and the body 10 can be controlled in step 110. The distance can be controlled according to the product shape and/or size. In step 112, the at least one first suction cup 60 and/or second suction cup 16 can be tilted. In step 114, the at least one first suction cup 60 and/or second suction cup 16 is engaged to the product 4. The pressure at the at least one first suction cup 60 and/or second suction cup 16 is reduced via the respective one first pipe 40 and/or at least two second pipes 18 in step 116. Step 116 can be performed in parallel with or after step 114.

The fluid communication can be blocked close to the first suction cup 60 and/or second suction cup 16 using a valve 30,70 in step 118. Blocking in step 118 can comprise completely obstructing or at least severely limiting or obstructing fluid communication by the valve 30,70 between the first suction cup 60 and/or second suction cup 16 and the suction means 20. The valve 30,70 is optionally closed when proximally moving the first suction cup 60 and/or second suction cup 16 to a predetermined proximal position in step 118. Step 118 can further include that proximally moving the first suction cup 60 and/or second suction cup 16 to the predetermined proximal position closes the valve 30,70. Optionally, step 118 further comprises moving the stem 30B of the valve 30 between a closed position and an open position. Optionally, step 118 further comprises moving the seat 72 of the axial valve 70 between a closed position and an open position. The stem can be biased to the open position. Moving the first suction cup 60 and/or second suction cup 16 to the predetermined proximal position can move the stem to the closed position. Step 118 can be performed in parallel with steps 104-124. In step 120, the first suction cup 60 and/or second suction cup 16 can be prevented from deforming using a gas permeable insert 28. Step 120 can be performed prior to, in parallel with or after step 118. The method 100 can further comprise measuring the weight of the product 4 in step 122. Step 122 can be performed after step 116. The product 4 can be moved from a supply location 6 to a discharge location 8 in step 124. Step can be performed after step 116.

Herein, the invention is described with reference to specific examples of the invention. It will, however, be evident that various modifications and changes may be made therein, without departing from the essence of the invention. For the purpose of clarity and a concise description features are described herein as part of the same or separate embodiments, however, alternative embodiments having combinations of all or some of the features described in these separate embodiments are also envisaged.

However, other modifications, variations, and alternatives are also possible. The specifications, drawings and examples are, accordingly, to be regarded in an illustrative sense rather than in a restrictive sense.

For the purpose of clarity and a concise description features are described herein as part of the same or separate embodiments, however, it will be appreciated that the scope of the invention may include embodiments having combinations of all or some of the features described.

The claim set as filed in the original international application is repeated now as clauses in order to include all original subject matter in the present divisional application.
1. A suction head for a product handling system for transferring products from a supply location to a discharge location, comprising:
   - a body arranged for being mounted to a transfer unit;
   - at least one of:
      - a first suction unit including a first suction cup arranged for engaging the product and a first pipe, wherein the first suction unit is configured to have the first suction cup in fluid communication with suction means via the first pipe for reducing pressure at the first suction cup, wherein the first pipe is longitudinally slidably engaged to the body, and/or
      - a second suction unit including a second suction cup arranged for engaging the product and at least two second pipes, wherein the second suction unit is configured to have the second suction cup in fluid communication with suction means via the at least two second pipes for reducing pressure at the second suction cup, wherein the at least two second pipes are longitudinally slidably engaged to the body.
2. Suction head according to clause 1, comprising at least one actuator for selectively moving the at least one first suction cup and/or second suction cup proximally or distally with respect to the body.
3. Suction head according to clause 1 or 2, comprising a position detector arranged for detecting displacement of the respective at least one first suction unit and/or second suction unit relative to the body.
4. Suction head according to clause 3, wherein the suction head is configured to provide a warning signal when a predetermined distal and/or proximal displacement is determined by the position detector.
5. Suction head according to any of the preceding clauses, wherein the first pipe is prevented from rotating relative to the body.
6. Suction head according to any of the preceding clauses, wherein, when viewed in the longitudinal direction of the first and/or second pipes, the respective one first pipe and/or at least two second pipes are positioned within the outer perimeter of the respective first suction cup and/or second suction cup.
7. Suction head according to any of the preceding clauses, comprising a control unit configured to control the distance between the at least one first suction cup and/or second suction cup and the body.
8. Suction head according to any of the preceding clauses, wherein the at least one first suction cup and/or second suction cup is arranged for tilting.
9. Suction head according to any of the preceding clauses, wherein the first suction cup and/or second suction cup includes a gas permeable insert.
10. Suction head according to any of the preceding clauses, wherein the respective first suction unit and/or the second suction unit comprises a valve for blocking the fluid communication between the respective first suction cup and/or second suction cup and the suction means.
11. Suction head according to clause 10, wherein the valve is positioned at a proximal part of the first pipe.
12. Suction head according to clause 10, wherein the valve is positioned upstream or downstream of the at least two second pipes.
13. Suction head according to any of clauses 10-12, wherein the valve is an axial valve.
14. Suction head according to any of clauses 10-13, wherein the valve comprises a seat at a proximal end of the first pipe, and a plug positioned proximal of the seat, wherein optionally the seat is formed by a proximal end of the first pipe.
15. Suction head according to clause 14, wherein the seat is axially movable relative to the plug for opening and closing the valve.
16. Suction head according to any of clauses 10-15, wherein the suction head is arranged to close the valve when proximally moving the first suction cup and/or second suction cup to a predetermined proximal position.
17. Suction head according to clause 16, wherein the valve is configured such that proximally moving the first suction cup and/or second suction cup to the predetermined proximal position closes the valve.
18. Suction head according to clause 17, wherein the valve includes a stem movable between a closed position and an open position, wherein the stem is biased to the open position, and moving the first suction cup and/or second suction cup to the predetermined proximal position moves the stem to the closed position.
19. Suction head according to any preceding clause, wherein the respective first pipe and/or second pipes are telescopic.
20. Suction head according to clause 19, further including a compensating mechanism for compensating a force, working to retract the suction cup, generated by suction applied to the respective first pipe and/or second pipes.
21. Suction head according to clause 20, wherein the compensating mechanism includes a piston closing a fluid volume in communication with the suction means.
22. Suction head according to clause 19, wherein the piston is fixed to a movable distal portion of the telescopic pipe.
23. Suction head according to clause 21 or 22, wherein the movable distal portion comprises an aperture such that the suction means are in communication with the fluid volume.
24. Suction head according to any of the preceding clauses, comprising a sensor for measuring a weight of the product.
25. A product handling robot, comprising a movable arm and a suction head according to any of clauses 1-24 mounted to the movable arm.
26. A product handling system, comprising a suction head according to any of clauses 1-24 and/or a product handling robot according to clause 25.
27. A method for engaging a product at a supply location for product handling, comprising:
   - providing at least one of:
      - a first suction unit including a first suction cup and a first pipe, wherein the first suction cup is in fluid communication with the first pipe, wherein the first pipe is longitudinally slidably engaged to a body, and/or
      - a second suction unit including a second suction cup and at least two second pipes, wherein the second suction cup is in fluid communication with the at least two second pipes, wherein the at least two second pipes are longitudinally slidably engaged to a body;
   - sliding the at least one first suction cup and/or second suction cup with respect to the body;
   - engaging the at least one first suction cup and/or second suction cup to the product; and
   - reducing pressure at the at least one first suction cup and/or second suction cup via the respective first pipe and/or at least two second pipes.
28. Method according to clause 27, comprising actively sliding the at least one first suction cup and/or second suction cup proximally or distally with respect to the body using at least one actuator.
29. Method according to clause 27 or 28, comprising detecting displacement of the respective at least one first suction unit and/or second suction unit relative to the body.
30. Method according to clause 29, comprising providing a warning signal when a predetermined distal and/or proximal displacement is determined.
31. Method according to any of clauses 27-30, comprising controlling the distance between the at least one first suction cup and/or second suction cup and the body according to the product shape and/or size.
32. Method according to any of clauses 27-31, comprising tilting of the at least one first suction cup and/or second suction cup.
33. Method according to any of clauses 27-32, comprising preventing the first suction cup and/or second suction cup from clogging using a gas permeable insert.
34. Method according to any of clauses 27-33, comprising blocking the fluid communication between the suction means and the respective first suction cup and/or second suction cup using a valve.
35. Method according to clause 34, wherein the valve is attached to the respective first pipe and/or second pipe for blocking the fluid communication.
36. Method according to clause 34 or 35, wherein the valve is positioned at a proximal part of the first pipe.
37. Method according to clause 34 or 35, wherein the valve is positioned upstream or downstream of the at least two second pipes.
38. Method according to any of clauses 34-37, wherein the valve is an axial valve.
39. Method according to any of clauses 34-38, wherein the valve comprises a seat at a proximal end of the first pipe, and a plug positioned proximal of the seat.
40. Method according to clause 39, wherein the seat is axially movable relative to the plug for opening and closing the valve.
41. Method according to any of clauses 34-40, comprising closing the valve when proximally moving the first suction cup and/or second suction cup to a predetermined proximal position.
42. Method according to clause 41, wherein proximally moving the first suction cup and/or second suction cup to the predetermined proximal position closes the valve.
43. Method according to clause 42, comprising moving a stem of the valve between a closed position and an open position, wherein the stem is biased to the open position, and moving the first suction cup and/or second suction cup to the predetermined proximal position moves the stem to the closed position.
44. Method according to any of clauses 27-43, comprising measuring the weight of the product.
45. Method according to any of clauses 27-44, comprising moving the product from a supply location to a discharge location.
46. Insert for a suction cup, including a basket having a bottom, sides, and an open mouth opposite the bottom, wherein the bottom and/or the sides are gas permeable, such as apertured.
47. Insert according to clause 46, wherein a cross dimension of the insert, such as a diameter, increases from the mouth towards the bottom.
48. Insert according to clause 46 or 47, including external projections, such as ribs.
49. Insert according to clause 46, 47 or 48, including a rim.
50. Suction cup assembly, including a suction cup and an insert according to any of clauses 46-49.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A suction head for a product handling system for transferring products from a supply location to a discharge location, comprising:
- a body arranged for being mounted to a transfer unit;
- at least one of:
- a first suction unit including a first suction cup arranged for engaging the product and a first pipe, wherein the first suction unit is configured to have the first suction cup in fluid communication with suction means via the first pipe for reducing pressure at the first suction cup, wherein the first pipe is longitudinally slidably engaged to the body, and/or
- a second suction unit including a second suction cup arranged for engaging the product and at least two second pipes, wherein the second suction unit is configured to have the second suction cup in fluid communication with suction means via the at least two second pipes for reducing pressure at the second suction cup, wherein the at least two second pipes are longitudinally slidably engaged to the body,
wherein the respective first suction unit and/or the second suction unit comprises a valve for blocking the fluid communication between the respective first suction cup and/or second suction cup and the suction means,
wherein the valve is positioned upstream or downstream of the at least two second pipes.

2. Suction head according to any of the preceding claims, wherein the first suction cup and/or second suction cup includes a gas permeable insert.

3. Suction head according to any of the preceding claims, wherein the valve is positioned at a proximal part of the first pipe.

4. Suction head according to any of the preceding claims, wherein the valve is an axial valve.

5. Suction head according to any of the preceding claims, wherein the valve comprises a seat at a proximal end of the first pipe, and a plug positioned proximal of the seat, wherein optionally the seat is formed by a proximal end of the first pipe.

6. Suction head according to claim 5, wherein the seat is axially movable relative to the plug for opening and closing the valve.

7. Suction head according to any of the preceding claims, wherein the suction head is arranged to close the valve when proximally moving the first suction cup and/or second suction cup to a predetermined proximal position.

8. Suction head according to claim 7, wherein the valve is configured such that proximally moving the first suction cup and/or second suction cup to the predetermined proximal position closes the valve, wherein the valve includes a stem movable between a closed position and an open position, wherein the stem is biased to the open position, and moving the first suction cup and/or second suction cup to the predetermined proximal position moves the stem to the closed position.

9. Suction head according to any preceding claim, wherein the respective first pipe and/or second pipes are telescopic.

10. Suction head according to claim 9, further including a compensating mechanism for compensating a force, working to retract the suction cup, generated by suction applied to the respective first pipe and/or second pipes, wherein the compensating mechanism includes a piston closing a fluid volume in communication with the suction means.

11. Suction head according to claim 9, wherein the piston is fixed to a movable distal portion of the telescopic pipe.

12. Suction head according to claim 10 or 11, wherein the movable distal portion comprises an aperture such that the suction means are in communication with the fluid volume.

13. A product handling robot, comprising a movable arm and a suction head according to any of claims 1-12 mounted to the movable arm.

14. A product handling system, comprising a suction head according to any of claims 1-12 and/or a product handling robot according to claim 13.

15. A method for engaging a product at a supply location for product handling, comprising:
- providing a suction head according to any of claims 1 to 12
- sliding the at least one first suction cup and/or second suction cup with respect to the body;
- engaging the at least one first suction cup and/or second suction cup to the product; and
- reducing pressure at the at least one first suction cup and/or second suction cup via the respective first pipe and/or at least two second pipes.
